Europäisches Patentamt

European Patent Office

Office européen des brevets

(19)

(11) Numéro de publication: **0 102 910 B1**

## (12) FASCICULE DE BREVET EUROPEEN

(45) Date de publication de fascicule du brevet:
**02.05.91**

(51) Int. Cl.⁵: **G10K 11/16**, B65G 21/08

(21) Numéro de dépôt: **83440030.1**

(22) Date de dépôt: **25.05.83**

(54) **Ensemble de capotage pour isolation phonique et stérile d'unités à bande transporteuse.**

(30) Priorité: **04.08.82 FR 8213740**

(43) Date de publication de la demande:
**14.03.84 Bulletin 84/11**

(45) Mention de la délivrance du brevet:
**02.05.91 Bulletin 91/18**

(84) Etats contractants désignés:
**AT BE CH DE GB IT LI LU NL SE**

(56) Documents cités:
**FR-A- 2 388 878**
**FR-A- 2 454 986**
**US-A- 3 905 444**
**US-A- 4 093 066**

(73) Titulaire: **SERRURERIE-CHAUDRONNERIE
TUYAUTERIE INDUSTRIELLE Guy RIONDE
"La Samaritaine"
F-88800 Vittel(FR)**

(72) Inventeur: **Rionde, Guy
98 rue Saint Eloy
F-88800 Vittel(FR)**

(74) Mandataire: **Metz, Paul
Cabinet METZ PATNI 95, rue de la Ganzau
F-67100 Strasbourg(FR)**

EP 0 102 910 B1

## Description

La présente invention a pour objet un ensemble de capotage pour l'isolation phonique et stérile d'unités de transfert, par exemple à bande transporteuse.

On connaît déjà des ensembles de capotage pour l'isolation phonique d'unités de transfert à bande transporteuse dont l'implantation nécessite un temps de préparation et de montage important, consacré en particulier au perçage des supports métalliques et des pattes de fixation et au montage sur l'unité de transfert qui ne peut s'effectuer que sur place car la pose des fixations dépend des emplacements des structures et appareillages déjà en place le long de celle-ci.

On connaît également d'autres types d'ensembles de capotage montés entre deux portiques dont la mise en place s'avère moins difficile.

L'ensemble de capotage pour convoyeur tel que décrit dans le brevet américain n° 4,093,066 au nom de la société COCA COLA Company se présente sous la forme d'un module en tunnel.

Ce module est constitué d'une plaque de surface arrière prolongée vers le haut par une partie incurvée bombée revenant vers l'avant, formant une couverture, un couvercle rabattable de face avant et un panneau incliné inférieur terminant vers le bas la surface latérale avant.

Ces différentes pièces reposent sur deux arceaux d'extrémité formant portiques, montés sur la partie basse du convoyeur.

Les arceaux sont montés sur la structure basse du convoyeur et les éléments de fermeture sont fixés à leurs extrémités sur lesdits arceaux.

La plaque de surface arrière est recouverte intérieurement le long de la partie inclinée d'une plaque ou d'un panneau de matériau d'isolation phonique, par exemple une mousse ou une matière fibreuse.

Ce panneau est porté par des profilés en U.

Cet ensemble de capotage permet d'obtenir une protection mécanique ainsi qu'une certaine isolation phonique des unités de transfert pour bouteilles tels que ceux envisagés sans ce brevet. Il permet aussi d'éviter l'accumulation d'humidité en raison de la conformation bombée de la partie supérieure et de la présence de faces latérales obliques.

Malheureusement, cette forme générale présente de nombreux endroits difficiles à atteindre pour l'entretien et le nettoyage.

Par ailleurs, il n'existe aucun élément amovible dont le nettoyage pourrait s'effectuer à l'extérieur du capotage ou dans un endroit différent.

De plus, ce type d'ensemble de capotage ne peut se monter que sur des convoyeurs à partie inférieure particulière adaptée à la forme des arceaux. Les fixations n'offrent en effet aucune latitude d'adaptation et de réglage.

Finalement, l'isolation phonique n'étant ni continue ni présente sur toutes les surfaces latérales, ne peut procurer qu'une atténuation limitée.

La présente invention a pour but de remédier à tous les inconvénients connus des ensembles de capotage de l'art antérieur.

Conformément à l'invention ce résultat est obtenu par un ensemble de capotage pour la protection et l'isolation phonique et stérile d'unités de transfert à bande transporteuse ou autre à accès par un couvercle rabattable, incliné et articulé par une charnière longitudinale, comportant un capot muni d'un matériau absorbeur de son, supporté par des portiques reliés par des moyens de fixation à l'unité de transfert, caractérisé en ce que le capot est formé d'une pluralité de panneaux phoniquement isolants, chaque panneau comportant une structure plane et amovible formée d'une plaque en matériau absorbeur de son, maintenue côté intérieur par une tôle perforée assujettie par deux pinces, supérieure et inférieure, conformées dans ladite tôle perforée par pliage longitudinal de ses bords, à deux glissières longitudinales situées à chaque extrémité inférieure et supérieure des panneaux et montées elles-mêmes sur les portiques, en ce que les moyens de fixation sont constitués par des équerres réglables en largeur, longueur et hauteur et en ce que la charnière longitudinale du couvercle est supportée par une gouttière de récupération des poussières ambiantes, des poussières d'usure de la charnière et de tout objet de petite dimension pouvant séjourner sur le capot.

Dans l'ensemble de capotage conforme à l'invention les supports ne sont pas assujettis au gabarit imposé par le transporteur et les capotages ne sont pas tributaires des supports, ce qui permet la fabrication sur plans et le montage par parties déjà constituées. Cet ensemble de capotage permet en outre la protection de l'unité transporteuse contre les poussières ou objets venant du milieu extérieur et la diminution du bruit à l'extérieur de l'unité de transfert.

On comprendra mieux l'invention à l'aide de la description ci-après en référence aux figures annexées :

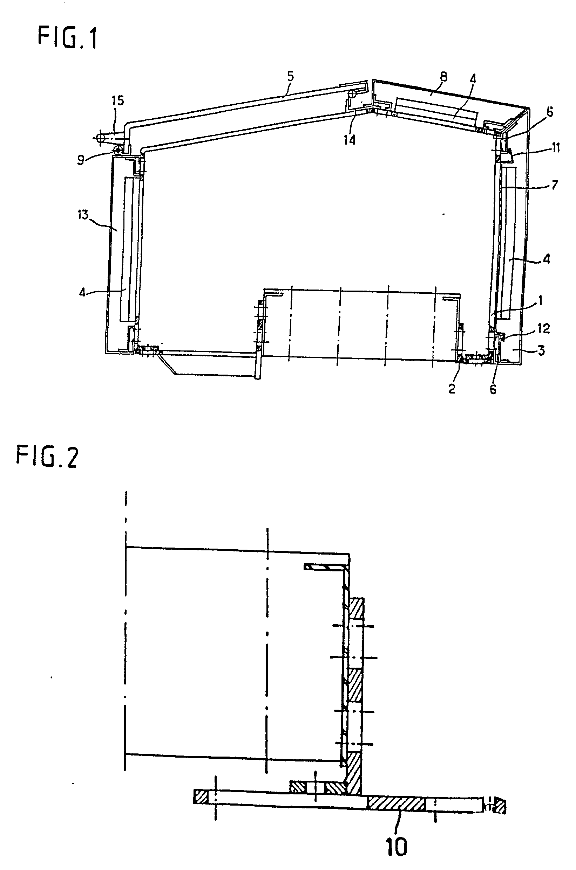

. la figure 1 est une vue en coupe transversale de l'ensemble de capotage selon l'invention ;

. la figure 2 est une vue en coupe d'une variante de patte de fixation.

Dans l'ensemble de capotage représenté sur la figure 1, les moyens de fixation comprennent des équerres de fixation 2 coopérant avec le bâti de la bande transporteuse et des supports en forme de portiques 1 montés sur les équerres 2 ou éventuellement sur des pattes de fixation 10 représentées sur la figure 2 et coopérant avec les équerres 2.

Les équerres de fixation 2 et les pattes de fixation 10 présentent des lumières de réglage de grande longueur.

Les moyens de fixation sont simples à réaliser et à préparer de manière standard en atelier. Ils ont également pour but de permettre le réglage en hauteur des portiques 1, d'adapter longitudinalement et transversalement les supports à l'unité de transfert à bande transporteuse sans être tributaire des appareillages déjà en place le long de l'unité de transfert.

Ces portiques 1 possèdent une forme de section en ligne polygonale pouvant comporter quatre côtés comme sur le mode de réalisation de la figure 1. Ils sont destinés à être disposés de façon régulière ou non le long de l'unité de transfert en tout point ne gênant pas le fonctionnement de la bande transporteuse et à former ainsi une sorte de carcasse ou tunnel. En outre, dans l'ensemble de capotage représenté sur la figure 1, les complexes amovibles et coulissants sont de préférence des panneaux de tôlerie de section transversale polygonale simple 3 ou 8 ou 13 renfermant le matériau absorbeur de son 4.

Les plaques 4 en matériau isolant phonique du commerce sont retenues dans le panneau 3 ou 8 ou 13 par une tôle perforée 7, elle-même maintenue sans aucune pièce de visserie pour assurer un montage et un démontage rapides et aisés et permettre ainsi le nettoyage périodique du matériau 4 subissant les projections des matières conditionnées circulant sur l'unité de transfert. Ceci est obtenu par exemple selon le mode de réalisation de la figure 1 par un ensemble de deux pinces, de largeurs inégales 11 et 12 réalisées par pliage longitudinal des plaques perforées 7.

Le panneau 3 ou 8 ou 13 comporte en outre dans le mode de réalisation préféré deux glissières telles que 6 situées aux deux extrémités du panneau et sur la même face. De simples boulons à tête carrée non représentés, assurent la liaison entre les glissières 6 et les portiques 1. Ainsi, par desserrage des boulons, le panneau 3 ou 8 ou 13 peut être, soit déposé pour un nettoyage éventuel, soit déplacé ou coulissé longitudinalement pour une intervention sur la bande transporteuse en un endroit donné, en fonction de la longueur des panneaux.

Ce mode de réalisation n'est pas limitatif. Le nombre et la disposition des glissières peuvent être différents tout en réalisant la même fonction.

On peut prévoir en outre des perforations dans la partie la plus basse des panneaux verticaux pour assurer le drainage de l'eau de condensation.

Comme dans le mode de réalisation de la figure 1, l'ensemble de capotage peut comporter un couvercle 5 en matière transparente ou non, monté sur une charnière du commerce du type piano par exemple. La massivité du couvercle 5 ainsi que la conception de la charnière sont telles, que ledit couvercle 5 est stable en position d'ouverture supprimant ainsi tout dispositif annexe de retenue tel que vérin par exemple et le rendant autobloquant.

Une gouttière 14 fixée sur les portiques 1 sert à la fois de support à la charnière du couvercle 5 et de gouttière de récupération pour les poussières ambiantes, les poussières d'usure de la charnière et pour tout objet de petite dimension pouvant séjourner sur le capot.

Les deux faces supérieures de l'ensemble de capotage sont légèrement inclinées par rapport à l'horizontale, de manière à ce qu'aucun objet tombé accidentellement sur l'ensemble de capotage ne puisse y séjourner et de manière à augmenter le champ de vision.

Le couvercle 5 est manoeuvré par une poignée 15 réalisée par exemple par un profilé du commerce fixé sur une partie ou sur toute la longueur du couvercle.

Le joint 9 recouvrant toute la bordure du couvercle opposée à celle fixée sur la charnière, a de préférence la forme d'un tube creux de façon à amortir davantage le choc et le bruit de fermeture.

L'ensemble de capotage conforme à l'invention n'est pas limité au seul mode de réalisation de la figure 1. Il peut, par exemple, être ouvert et comporter seulement deux panneaux disposés latéralement, ou être fermé par des panneaux ou des couvercles ou une combinaison panneaux-couvercles.

## Revendications

1.  Ensemble de capotage d'isolation phonique et stérile pour unités de transfert à accès par un couvercle (5) rabattable, incliné et articulé par une charnière longitudinale, comportant un capot muni d'un matériau absorbeur de son, supporté par des portiques (1) reliés par des moyens de fixation à l'unité de transfert, caractérisé en ce que le capot est formé d'une pluralité de panneaux phoniquement isolants (3,8,13), chaque panneau comportant une structure plane et amovible formée d'une plaque (4) en matériau absorbeur du son, maintenue côté intérieur par une tôle perforée (7) assujettie par deux pinces, supérieure (11) et inférieure (12), conformées dans ladite tôle perforée(7) par pliage longitudinal de ses bords, à deux glissières longitudinales (6) situées à chaque extrémité inférieure et supérieure des panneaux et montées elles-mêmes sur les portiques (1), en ce que les moyens de fixation sont constitués par des équerres (2) réglables en largeur, longueur et hauteur et en ce que la charnière longitudinale du couvercle (5) est supportée par une gouttière (14) de récupération des poussières ambiantes, des poussières d'usure de la charnière et de tout objet de petite dimension pouvant séjourner sur le capot.

2. Ensemble de capotage selon la revendication 1, caractérisé en ce que les panneaux phoniquement isolants constituant le capot sont deux panneaux latéraux verticaux (3 et 13) et un panneau supérieur incliné (8).

3. Ensemble de capotage selon la revendication 2, caractérisé en ce que les panneaux latéraux verticaux (3,13) présentent des perforations dans leur partie la plus basse pour assurer le drainage de l'eau de condensation.

4. Ensemble de capotage selon l'une des revendications précédentes, caractérisé en ce qu'il comporte des pattes de fixation coopérant avec les équerres (2).

5. Ensemble de capotage selon la revendication 4, caractérisé en ce que les pattes de fixation et les équerres (2) présentent des lumières de réglage de grande longueur.

6. Ensemble de capotage selon l'une des revendications précédentes, caractérisé en ce que la bordure du couvercle (5) opposée à celle fixée sur la charnière est équipée d'un joint (9) en forme de tube creux de façon à amortir le choc et le bruit de fermeture.

## Claims

1. A sound and sterile insulating cowling assembly for transfer units offering access through an inclined fold-back cover (5) articulated by a longitudinal hinge, comprising a cover provided with a sound absorbing material and supported by frames (1) connected by fixing means to the transfer unit, characterised in that the cover consists of a plurality of sound insulated panels (3, 8, 13), each panel comprising a flat and removable structure consisting of a sheet (4) of sound absorbing material, maintained on the inside face by a perforated plate (7) secured by two clamps, an upper clamp (11) and a lower clamp (12), shaped into the said perforated plate (7) by a longitudinal folding of their edges, with two longitudinal slides (6) situated at each bottom and top end of the panels and mounted on the frames (1), and in that the fixing means consist of angle members (2) which are adjustable in width, length and height and in that the longitudinal hinge of the cover (5) is supported by a gutter (14) for recovering ambient dust, dust created by the wear and tear on the hinge and any small sized object which may come to rest on the cover.

2. A cowling assembly according to claim 1, characterised in that the sound insulating panels which make up the cover are two vertical lateral panels (3 and 13) and on inclined top panel (8).

3. A cowling assembly according to claim 2, characterised in that the lateral vertical panels (3, 13) have in their lowest part perforations which allow drainage of water produced by condensation.

4. A cowling assembly according to one of the preceding claims, characterised in that it comprises fixing lugs which co-operate with the angle members (2).

5. A cowling assembly according to claim 4, characterised in that the fixing lugs and the angle members (2) have very long adjustment slots.

6. A cowling assembly according to one of the preceding claims, characterised in that the edge of the cover (5) opposite that which is fixed on the hinge is provided with a seal (9) in the form of a hollow tube and intended to deaden the impact and noise of closure.

## Ansprüche

1. Haubenabdeckung für einen Schutz und für eine akustische und sterile Isolierung von Fördereinrichtungen mit Förderband, mit einem Zugang über einen Deckel (5), der herunterklappbar, schräg und mit Hilfe eines Scharniers gelenkig ist, bestehend aus einer Haube die mit einem schallschluckenden Werkstoff versehen ist und von Portalen (1) getragen wird, die über Halterungen mit der Fördereinrichtung verbunden sind, **dadurch gekennzeichnet, daß** die Haube aus einer Vielzahl von schallisolierenden Tafeln (3,8,13) gebildet ist, wobei jede Tafel einen ebenen und abnehmbaren Teil enthält, der aus einer Platte (4) aus schallschluckendem Werkstoff gebildet ist, die auf der Innenseite durch ein gelochtes Blech (7), das oben und unten durch zwei Klammern (11 und 12), die durch Falzen seiner Ränder in Längsrichtung gebildet sind, an zwei Gleitschienen (6) in Längsrichtung gehalten ist, die an jedem unteren und oberen Ende der Tafeln angeordnet und selbst auf den Portalen (1) montiert sind, daß die Befestigungselemente aus Winkelstücken (2) bestehen, die in der Breite, in der Länge und in der Höhe einstellbar sind, und daß das Scharnier in Längsrichtung des Deckels (5) durch eine Rinne (14) für das Auffangen von Staubkörnern aus der Umgebung, von Staubkörnern aus der Abnützung des Scharniers und von jedem Gegenstand von kleinen Abmessungen,der auf die Haube geraten kann, getragen wird.

2. Haubenabdeckung gemäß Anspruch 1,
   **dadurch gekennzeichnet, daß**
   die schallisolierenden Tafeln, die die Haube bilden, zwei seitliche senkrechte Tafeln (3 und 13) und eine obere schräge Tafel (8) sind.

3. Haubenabdeckung gemäß Anspruch 2,
   **dadurch gekennzeichnet, daß**
   die seitlichen senkrechten Tafeln (3,13) in dem untersten Teil Lochungen für die Abführung des Kondensats aufweisen.

4. Haubenabdeckung gemäß einem der vorstehenden Ansprüche,
   **dadurch gekennzeichnet, daß**
   sie Befestigungslaschen enthält, die mit den Winkelstücken (2) zusammenwirken.

5. Haubenabdeckung gemäß Anspruch 4,
   **dadurch gekennzeichnet, daß**
   die Befestigungslaschen und die Winkelstücke längere Schlitze für die Endstellung aufweisen.

6. Haubenabdeckung gemäß einem der vorstehenden Ansprüche,
   **dadurch gekennzeichnet, daß**
   der Rand des Deckels (5) gegenüber dem Rand, der an dem Scharnier befestigt ist, mit einer hohlen Dichtung (9) versehen ist, um den Stoß und das Geräusch beim Schließen zu dämpfen.

FIG.1

FIG.2

10